# EUROPEAN PATENT SPECIFICATION

(11) **EP 1 283 157 B1**
(45) Date of publication and mention of the grant of the patent: **09.05.2007**
(21) Application number: 02017711.9
(22) Date of filing: 07.08.2002
(51) Int. Cl.: B62M 27/00, B62M 27/02

(54) **Snowmobile**
Schneemobile
Motoneige

(30) Priority: 09.08.2001 JP 2001241610
(43) Date of publication of application: 12.02.2003
(73) Proprietor: YAMAHA HATSUDOKI KABUSHIKI KAISHA, Iwata-shi, Shizuoka-ken (JP)
(72) Inventor: Etou, Toyochika, Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- US-A- 3 613 205
- US-A- 3 840 083
- US-A- 3 871 460
- US-A- 5 660 245
- US-A- 5 944 133

## Description

The present invention relates to a snowmobile, and particularly refers to a frame structure for a snowmobile.

Snowmobiles are provided with paired right and left skis in the front part of the vehicle body. The skis are steered through the steering system including a steering column and linking rods connected to handlebars. An engine compartment is formed in the front part of the vehicle to house an engine mounted on the vehicle frame. The crankshaft of the engine is connected through an automatic belt transmission to a propelling track belt. The automatic belt transmission is constituted with an endless V-belt routed around between a drive pulley attached to the power takeout shaft connected to the crankshaft and a driven wheel attached to the driven shaft. The driven wheel is connected through an endless transmitting means such as a chain to a drive wheel that drives the propelling track. The chain is covered with a transmission cover such as a chain cover.

Conventional vehicle frame for snowmobiles (for example one disclosed in JP-A-H9-193880 and in closest prior art document US 5944133 which discloses all the features of the preamble of independent claim 1) is constituted by welding and riveting together plural sheet metal-made frames, aluminum extrusion-made members, and brackets. An engine is mounted on the vehicle frame and the driven shaft of an automatic belt transmission is journaled on the front part of the vehicle frame.

However, the conventional frame structure for the snowmobile has a problem of possible low accuracy in positions of various shafts for transmitting the rotary power of the engine to the automatic belt transmission resulting from the processing accuracy of the frame components such as plural frame members and from assembly accuracy in putting together such components.

The conventional vehicle frame constituted by putting together plural components such as the frame members has another problem of insufficient strength for supporting the driven shaft of the automatic belt transmission and for mounting the engine on the vehicle frame.

The present invention is devised in view of the above-described prior art, it is an objective of the present invention to provide a snowmobile having a frame structure providing high accuracy in the mutual positions of attaching rotary transmission shafts and attaching other members to the vehicle frame.

This objective is solved by a snowmobile comprising an engine provided in an engine compartment, having a frame structure with a vehicle frame main member and a central frame member being secured to the vehicle frame main member at a rear upper side of the engine compartment, wherein said central frame member is made as an integrally cast component and a front part thereof is adapted to suspend the engine.

According to the invented snowmobile, the central frame member is made by casting as a single unit on which the engine is mounted. Therefore, the central frame member is easily unitized by casting with high accuracy of the central frame member itself and with mutual position accuracy of the various shafts transmitting the rotary power from the engine to a transmission. Furthermore, because those shafts are attachable with high accuracy to the vehicle frame, attachment accuracy of other components relative to those shafts is also improved.

Additionally, the central frame member is provided with sufficient strength for supporting the engine and the shafts, in particular a driven shaft of the transmission.

According to a preferred embodiment, the central frame member comprises a bottom portion, a rear side portion and paired right and left side portions which are integrally cast-formed as one unitized component.

Preferably, there is provided a transmission, in particular an automatic belt transmission, wherein a power output of the engine is transmitted to a track belt by the transmission, and a driven shaft of said transmission is supported by the paired right and left side portions of the central frame member.

Beneficially, one of the paired left and right side portions is provided with a through hole for the driven shaft to pass through and the respective other of said paired left and right side portions is provided with a shaft hole for attaching a bearing at the end of the driven shaft.

Moreover, the rear side portion of said frame member may be made nearly upright and may be provided with through holes through which exhaust pipes extending from the engine are led out of the engine compartment.

Additionally, there may be provided a heat shield, wherein the central frame member is provided with bosses for attaching the heat shield.

Furthermore, there may be provided a heat exchanger unit for engine coolant water secured to the rear side portion of the central frame member.

According to a further preferred embodiment, a rotation of the driven shaft of said transmission is transmitted to a track belt drive shaft through an endless transmitting means and a transmission case for housing said endless transmitting means is provided on the side portion of said central frame member.

Therein, said transmission case may be integrally formed with said central frame member by casting.

According to another preferred embodiment, there is provided a further frame member comprises a bottom plate and paired right and left side plates continuous from said bottom plate, wherein said further frame member is attached to the vehicle frame main member and constitutes the front part of the vehicle frame main member.

Therein, the paired right and left side portions of the central frame member (9) may be respectively secured to the paired right and left side plates of said further frame member constituting the front part of the vehicle frame main member.

According to yet another preferred embodiment, the paired right and left side portions of said central frame member are integrally cast-formed with upright extending portions, and said extending portions are connected to the front part of the vehicle frame main member through reinforcing members.

Therein, said reinforcing members may be adapted to support handlebars for steering skis of the snowmobile.

Moreover, there may be provided a steering column for transmitting turning motion of said handlebars to skis, wherein said steering column is axially supported by said central frame member.

According to still another preferred embodiment, there are provided bolts for suspending the engine, wherein said bolts are installed as bridges to securely interconnect the paired right and left side portions of said central frame member.

Therein, there may be provided a hollow, male screw member being screwed into at least one of the paired right and left side portions of said central frame member to the extent that an end portion of said male screw member projects toward the inside of said side portion so that a distance between the end portion of the male screw portion and the opposite side portion is adjustable by turning said male screw member, a bolt may be passed through a collar and said male screw member, and in the state of the collar being sandwiched between the end portion of the male screw member and the side portion opposite said male screw member, the paired right and left side portions may be tightly secured together by means of a nut engaging with said bolt.

In the following, the present invention is explained in greater detail with respect to several embodiments thereof in conjunction with the accompanying drawings, wherein:
- FIG. 1: is an overall side view of a snowmobile associated with an embodiment of the present snowmobile;
- FIG. 2: is an external view of the overall constitution of the vehicle frame of the present snowmobile;
- FIG. 3: is an oblique view of the constitutional details of the front part of the vehicle frame shown in FIG. 2;
- FIG. 4: is a plan view of a frame member of the embodiment;
- FIG. 5: is a side view of the frame member of FIG. 4;
- FIG. 6: is a front view of the frame member of FIG. 4;
- FIG. 7: is a front view of the area where the exhaust pipe is connected;
- FIG. 8: is a sectional view of the area where the exhaust pipe is connected;
- FIG. 9: is a view for explaining the constitution of the area where the engine is suspended;
- FIG. 10: is a side view of the front part of a vehicle frame of the embodiment;
- FIG. 11: is a front view of the vehicle frame of FIG. 10;
- FIG. 12: is a sectional view of the foot placing area of the footstep;
- FIG. 13: shows the overall constitution of the steering system of the embodiment of the present snowmobile;
- FIG. 14: is an oblique view of the essential parts of the steering system of FIG. 13;
- FIG. 15: shows the constitution of the chain case in side view;

- FIG. 16: shows the section A-A of FIG. 15;
- FIG. 17: is an overall sectional view of the chain case shown in FIG. 15; and
- FIG. 18: is a sectional view of part of the transmission device where the driven wheel of the automatic belt transmission is located.

An embodiment of the present snowmobile is described below in reference to the accompanying drawings.

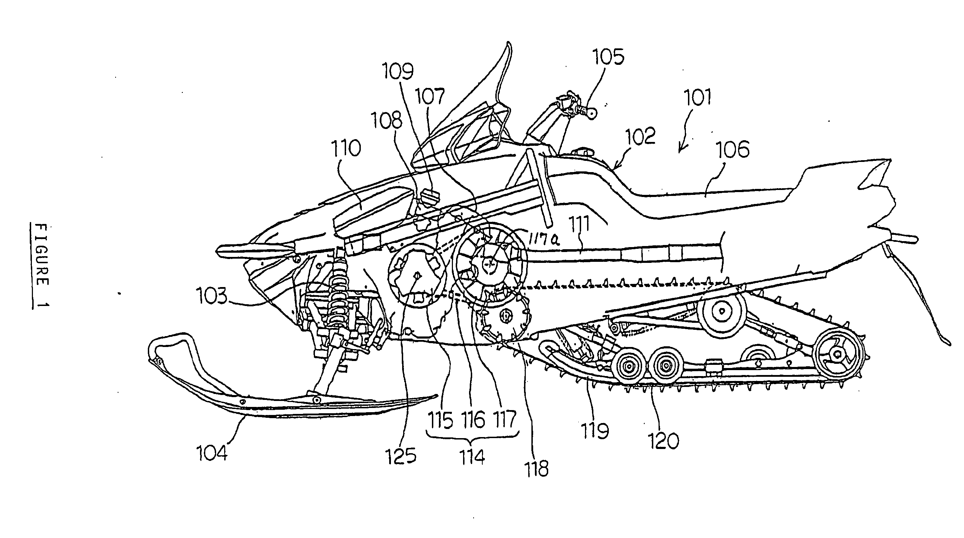

FIG. 1 is an overall side view of a snowmobile associated with the embodiment.

The snowmobile 101 comprises a vehicle body 102 with its front part having right and left front suspensions (dampers) 103. Direction controlling skis 104 are connected to the respective front suspensions 103. The skis 104 are linked to handlebars 105 located in the center of the vehicle through steering system components (not shown) such as a steering shaft, arm pivots, and linking rods. A seat 106 for a rider to sit on is provided in a position on the vehicle body 102 and behind the handlebars 105.

An engine 107 is placed in the front part of the vehicle body 102. The engine 107 in this embodiment is of a water-cooled, four-stroke cycle, in-line, four cylinder type. The engine 107 has a crankshaft (not shown) extending in the vehicle width direction (normal to the drawing surface) and cylinders tilted rearward. A carburetor 109 is interposed in the intake pipe 108 of the engine 107. An intake silencer 110 is provided at the end of the intake pipe. An exhaust pipe 111 is provided behind the engine 107. A muffler (not shown) is provided at the end of the exhaust pipe located near the rear end of the vehicle body.

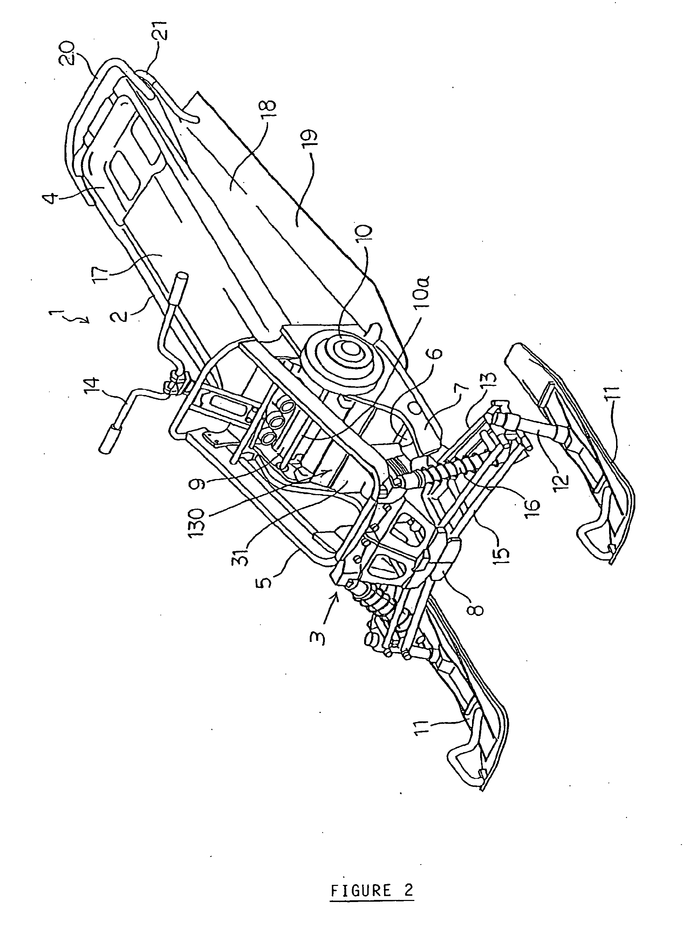

The crankshaft (not shown) of the engine 107 is connected to a power takeout shaft 125 parallel to the crankshaft. An automatic V-belt transmission 114 is attached to the power takeout shaft 125. The automatic transmission 114 is constituted with a drive pulley 115 attached to the power takeout shaft 125 and a driven pulley (driven wheel) 117 connected to the drive pulley 115 through a V-belt 116. The driven pulley 117 is attached to the end of a driven shaft 117a on the left side, for example, of the vehicle body (see FIG. 2).

A driven wheel (not shown) is attached to the end, opposite the driven pulley 117 (the right side of the vehicle body), of the driven shaft 117a. The driven wheel is connected through a chain (not shown) to a drive wheel 118 to propel the vehicle. A track belt 120 is routed around the drive wheel 118. In this way, the rotary power of the crankshaft of the engine 107 is transmitted through the automatic transmission 114 to the drive wheel 118 which drives the endless track belt 120 attached to a slide rail 119 to propel the vehicle body 102.

FIG. 2 is an external view of overall constitution of the vehicle frame of the snowmobile according to the present embodiment.

The vehicle body 1 of this snowmobile is constituted with a vehicle frame main member 2 constituting the central part (almost the whole) of the vehicle body, a front vehicle frame 3 attached to the front part of the main member 2, and a rear vehicle frame 4 attached to the rear part of the main member 2.

The vehicle frame main member 2 is constituted with a main member top plate 17, main member side plates 18 attached to both sides of the main member top plate 17, and footsteps 19 integral with the main member side plates 18 (actual foot placing areas are formed in the forward areas of the footsteps 19). Heat exchanger (not shown) for engine coolant water to circulate is arranged on the underside of the footsteps 19. Side plates 7 are attached to be integral with the front sides of the right and left main member side plates 18 by means of bolts or rivets. A bottom plate 6 is provided to interconnect the right and left side plates 7. The right and left side plates 7 and the bottom plate 6 are also integral with the main member side plates 18 to constitute the vehicle frame main member 2.

The front vehicle frame 3 is constituted for example with a suspension member supporting member 8 made by die casting. The suspension member supporting member 8 is secured to a reinforcing U-shape frame 5, the bottom plate 6 constituting the front part of the vehicle frame main member 2, and the right and left side plates 7.

The rear vehicle frame 4 is made for example by die casting. A central frame member 9 made for example by die casting is connected to be integral with the central part of the vehicle frame main member 2 by means of bolts or rivets, to constitute the vehicle frame.

The engine (not shown) is placed in an engine compartment 130 formed between the right and left side plates 7 that form the front part of the vehicle frame main member 2. The engine, at its front side, is suspension-mounted on the suspension member supporting member 8 made by die casting constituting the front vehicle frame 3 and, at its rear side, suspension-mounted on the die-cast central frame member 9.

A heat exchanger 31 for engine coolant water to circulate is placed behind the engine. The heat exchanger 31 is secured between the right and left side plates 7 to constitute part of the vehicle frame together with the side plates 7.

A driven wheel 10 constituting a transmission mechanism (not shown) is connected to an output shaft (not shown) of the engine to drive a track belt (not shown). The driven wheel 10 is supported with the side plates 7 constituting the front part of the vehicle frame main member 2. An end, opposite the driven wheel 10, of a driven shaft 10a is provided with a sprocket (not shown) to drive and rotate a drive wheel (not shown) for the track belt through a chain (not shown).

Skis 11 are provided as suspended with the right and left sides of the suspension member supporting member 8. To each ski 11 is secured a rotatable steering shaft (not shown) passing through a holding cylinder member 12. A steering rod 13 is connected to the steering shaft. The steering rod 13 is connected through a steering system (not shown) to handlebars 14 located in the center of the vehicle body 1 and is steered as the handlebars 14 are operated.

Ends on one side (on the base side) of upper and lower pairs of parallel linking arms 15 are pivoted to right and left sides of the suspension member supporting member 8. The other side ends of the parallel linking arms 15 may swing about the base sides and are secured to the holding cylinder members 12 that hold the skis 11. Upper ends of shock absorbers 16 are pivoted to the right and left upper parts of the suspension member supporting member 8. The lower ends of the shock absorbers 16 are attached to the ends of the parallel linking arms 15 or to the holding cylinder members 12 secured to those ends.

The rear vehicle frame 4 secured to the rear part of the vehicle frame 2 is shaped like a tray (or a box without a top) in which a muffler (not shown) is placed. Behind the rear vehicle frame 4 are secured a grab bar 20 and a coolant water pipe 21. The coolant water pipe 21 is connected to the heat exchanger 31 of the footsteps 19.

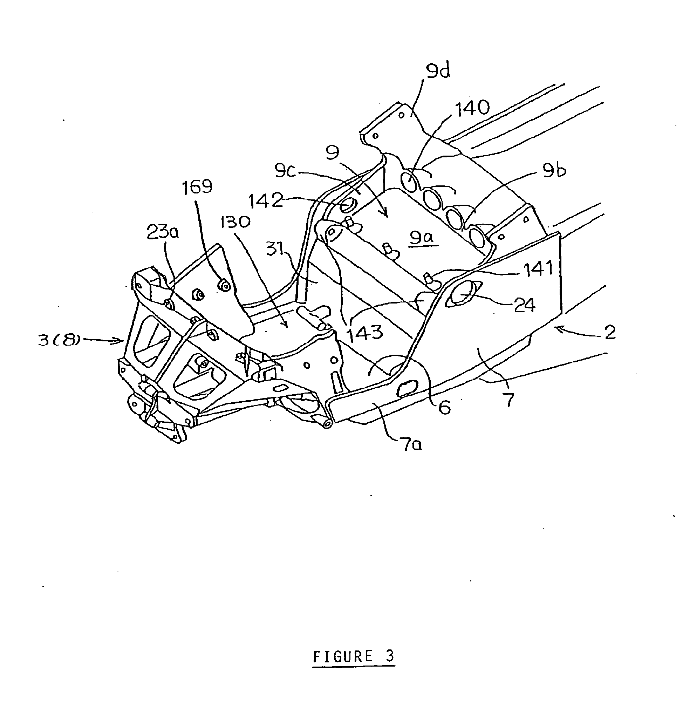

FIG. 3 is an oblique view of the front part of the vehicle frame. The front part of the vehicle frame main member 2 is made up of the right and left side plates 7 and the bottom plate 6. The suspension member supporting member 8 is secured to the front end part of the vehicle frame main member 2. The upper part of the suspension member supporting member 8 is provided with four bolt holes 23a for securing the reinforcing U-shape frame 5 (FIG. 2). The right and left rear end parts (not shown) of the U-shape frame 5 are respectively secured to the right and left projections 9d die-cast integrally with the central frame member 9.

The frame member 9 is located on the rear upper side of the engine compartment 130. The frame member 9 has a bottom portion 9a, a rear side portion 9b, and right and left side portions 9c that are integral with the former two portions. The right and left side portions 9c are provided with integrally formed extensions 9d on the rear upper side of the right and left side portions 9c. The rear side portion 9b is provided with through holes 140 for the exhaust pipes of the engine (not shown) to pass through and extend outward of the engine compartment. The exhaust pipes (not shown) are provided with a heat shield, which will be described later. The numeral 141 stands for bosses for attaching the heat shield. The numeral 24 stands for a shaft hole for attaching a bearing (not shown) at the end of the driven shaft 10a (FIG. 2) of the driven wheel 10 (FIG. 2). On the opposite side of the shaft hole 24 is also provided a through hole 142 for the driven shaft to pass through. Bosses 143 are for suspending the rear part of the engine. The frame member 9 described above may be formed by various casting methods such as casting with ordinary metallic dies, die casting, lost-wax process, etc. The frame member 9 is secured with bolts and rivets (not shown) to the right and left side plates 7 constituting the front part of the vehicle frame main member 2.

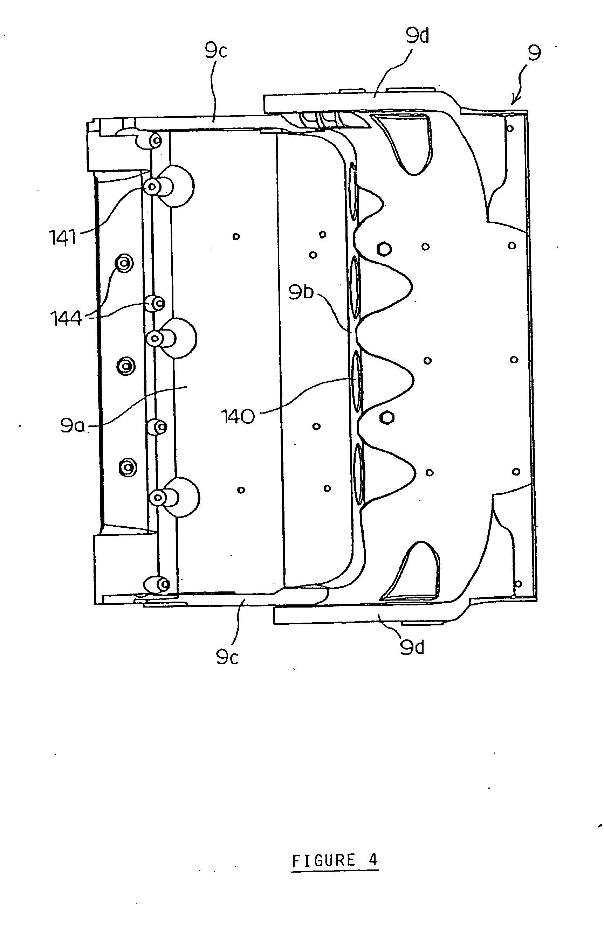

FIGs. 4, 5, and 6 are a plan view, a side view, and a front view, respectively of the frame member 9 in an embodiment of the present snowmobile.

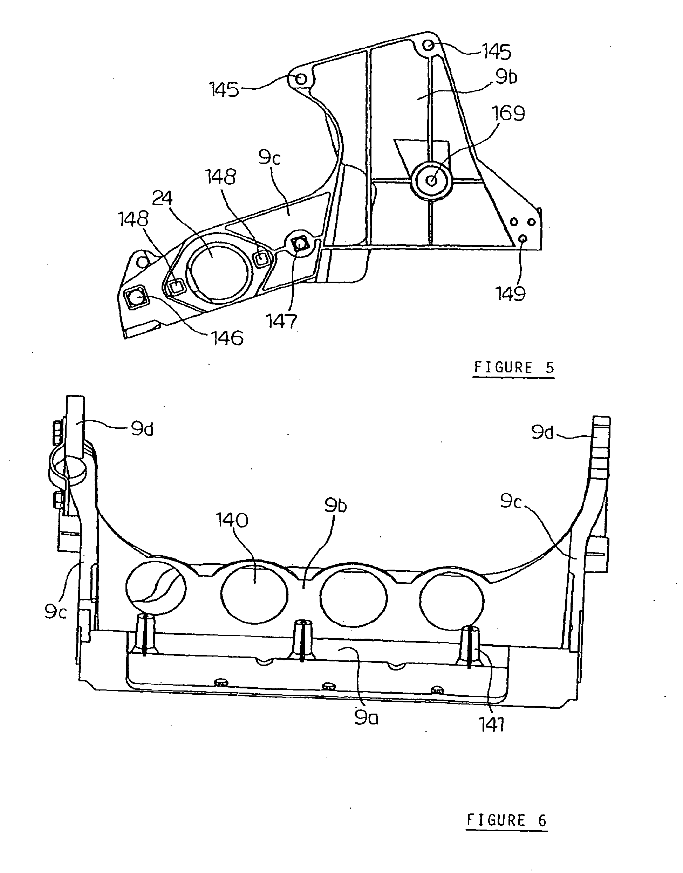

The frame member 9 as described before has a bottom portion 9a, a rear side portion 9b, and right and left side portions 9c that extend from and are integral with the former two portions, and the rear upper side of the right and left side portions 9c is provided with integrally formed extensions 9d. The bottom portion 9a is provided with three bosses 141 for attaching an exhaust pipe heat shield (not shown) and with seven bosses (or rivet holes) 144 for securing the heat exchanger (not shown) for engine coolant water. The rear side portion 9b is provided with four exhaust pipe passage holes 140 corresponding to four cylinders. The side portion 9c (FIG. 5) on the left side with respect to the vehicle body is provided with a shaft hole 24 for attaching a bearing for the driven shaft. On both sides of the shaft hole 24 are bored bolt passage holes 148 for securing a bearing holder. Incidentally, the bolt passage holes 148 are unnecessary when the bearing is attached by press fit instead of using bolts.

A bolt passage hole 147 is provided for receiving a bolt for securing the frame member 9 to the vehicle frame main member. The frame member 9 is secured to the vehicle frame main member using bolts and rivets (not shown) through the bolt passage holes 146 and 147 in the side portions 9c, and the rivet holes 149 in the extensions 9d extending toward the rear of the side portions. An engine suspension bolt (not shown) is inserted, as will be described later, into the bolt passage hole 146 on the front side. Holes 145 for attaching the reinforcing frame are provided in the upper part of the extension 9d. A hole 169 for attaching a support pipe for supporting a footstep described later is provided in about the center of the extension 9d.

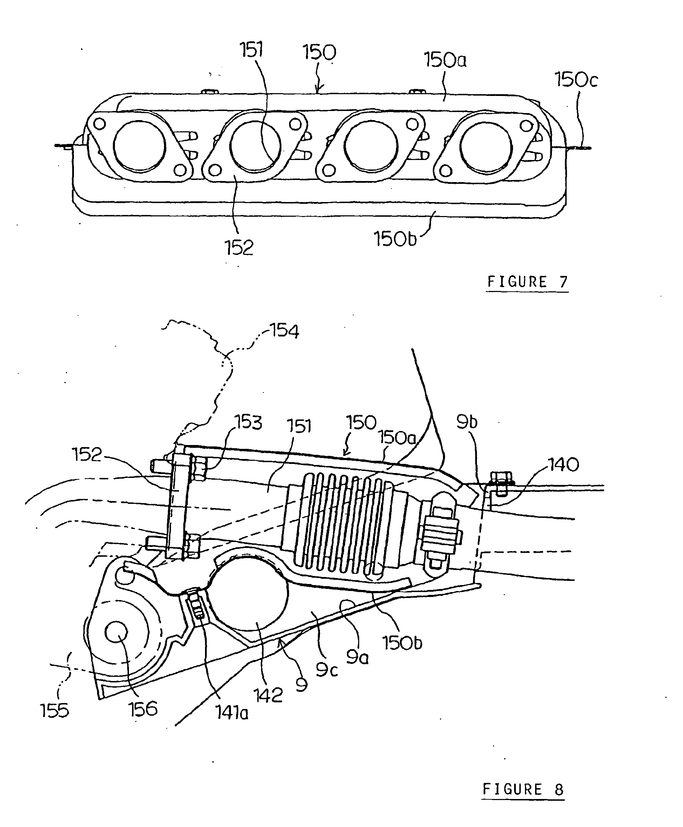

FIG. 7 is a front view of the area where the exhaust pipe heat shield is located.

A heat shield 150 is placed over the exhaust pipes 151 located behind the rear side portions 9c of the frame member 9. The heat shield 150 is made up of an upper shield 150a and a lower shield 150b made by press and bending processes of sheet metal such as steel sheet, and by putting together and tightening their flanges 150c by means of bolts (not shown). Four parallel exhaust pipes 151 are connected to the exhaust passages (not shown) of the engine by means of pipe flanges 152.

FIG. 8 shows a cross section of the area where the heat shield is located. An engine boss portion 155 at the rear part of the engine 154 is mounted as described later on the frame member 9 by means of a bolt 156 for suspension. The right hand side portion 9d of the frame member 9 is provided with a through hole 142 for the driven shaft (not shown) to pass through. The lower shield 150b of the heat shield 150 is secured using rivets 141a to the bosses 141 formed on the bottom portion 9a of the frame member 9. Each of the exhaust pipes 151, with the flange 152 at its end, is connected to the exhaust passages (not shown) of the engine 154 using bolts 153. The exhaust pipes 151 extend rearward through the exhaust pipe passage holes 140 bored in the rear side portion 9b of the frame member 9.

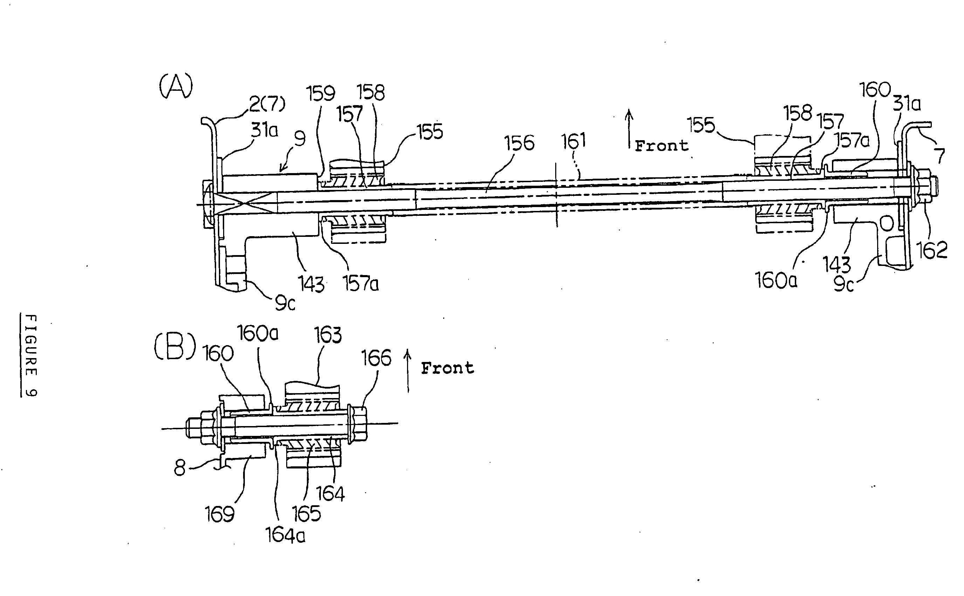

FIG. 9 shows a cross section of the engine suspension support structure. FIG. 9 (A) shows the rear part of the engine mounted on the frame member 9, a cast component of the present invention. FIG. 9 (B) shows the front part of the engine mounted on the suspension member supporting member 8, also a cast component constituting the front frame member 3.

As shown in FIG. 9 (A), two, right and left engine boss portions 155 are formed integrally with the rear part of the engine. To each of the engine boss portions 155 is attached a metallic collar 157 surrounded with bake-attached rubber 158. Each metallic collar 157 has a flange 157a located on the outer side.

The inside surfaces of the right and left side portions 9c of the frame member 9 are formed with projecting bosses 143 for mounting the engine. Each of the right and left bosses 143 is located so that its outer side and each of the right and left side plates 7 of the vehicle frame main member 2 sandwich the flange 31a of the heat exchanger 31. The bolt 156 passes through and bridges both of the right and left bosses 143.

The end surface of the left hand side boss 143 is made the reference surface 159. The flange 157a of the metallic collar 157 of the boss portion 155 on the engine side comes into contact with the reference surface 159.

The right hand side boss 143 is formed with a female thread for a cylindrical, male screw member 160 to engage with. The male screw member 160 has at its one end a flange 160a. The bolt 156 passes through the male screw member 160.

A collar 161 of about the same length as the distance between the right and left boss portions 155 on the engine side is fitted over the bolt 156.

To mount the engine, first the engine is inserted so that the boss portions 155 come between the right and left bosses 143 of the frame member 9. Here, the distance between the right and left bosses 143 of the frame member 9 is longer than the distance between outside surface of the right and left boss portions, 155 on the engine side, so that the engine is inserted smoothly. In that state, a tool is inserted from outside the side plate 7 of the frame main member to turn the male screw member 160 and cause its flange 160a to contact the flange 157a of the metallic collar 157 on the engine side. Next, in the state of the collar 161 being placed between the right and left boss portions 155 on the engine side, the bolt 156 is inserted. After that, a nut 162 is screwed to the bolt 156 extending out of the side plate 7 of the vehicle frame on the right hand side to secure the engine.

The suspension structure of the front part of the engine is arranged as shown in FIG. 9 (B). That is, boss portions 163 of the engine are supported using bolts 166 with right and left bosses 169 formed on the suspension member supporting member 8 (FIGs. 2 and 3). Each boss portion 163 of the engine, like the boss portion 155 of the rear part of the engine shown in FIG. 9 (A), is made up of a metallic collar 164 having a flange 164a, and rubber 165. Each boss 169 is provided with the male screw member 160 to make adjustable the distance between the right and left bosses 169.

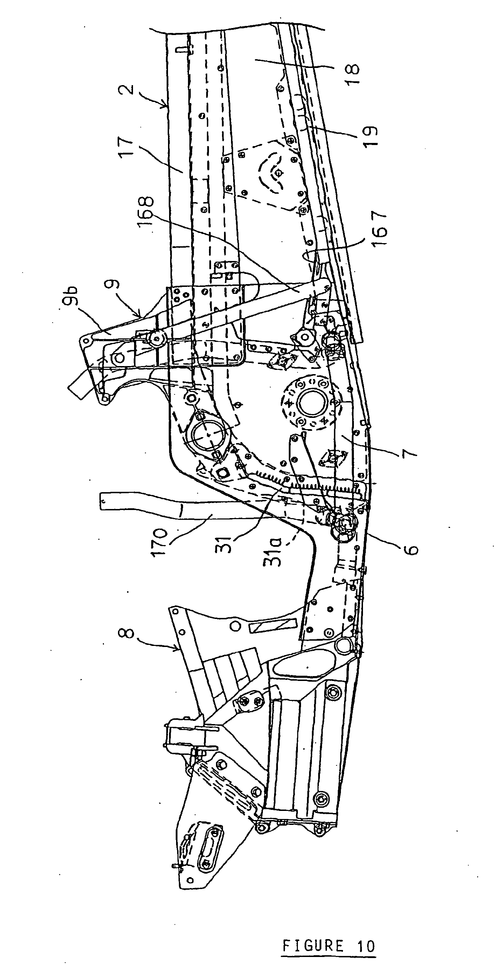

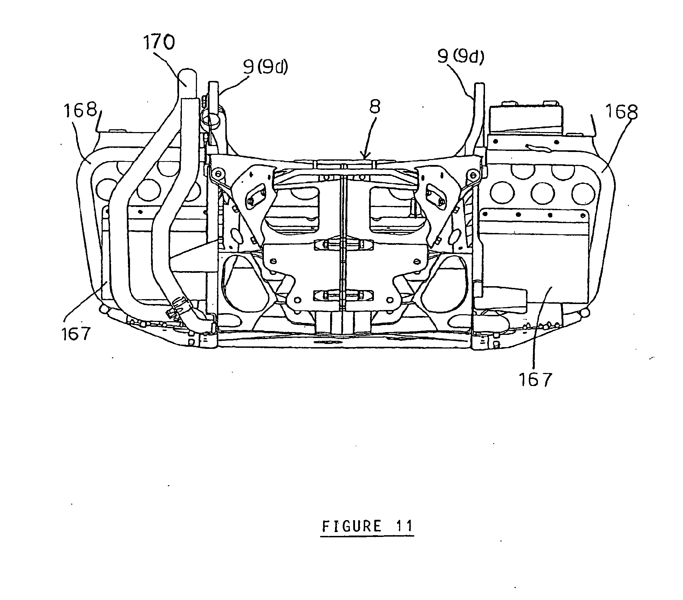

FIGs. 10 and 11 are side and front views, respectively, of the front part of the vehicle frame of the present snowmobile.

Footsteps 19 (see FIG. 2) are formed at the lower edges of the main member side plates 18 constituting the right and left side faces of the vehicle frame main member 2, with footstep tables 167 provided at the front ends of the right and left footsteps 19. Supporting pipes 168 for supporting both of the footstep tables 167 from under are provided on the right and left outer sides of the side plates 7. The lower end of the supporting pipe 168 is secured together with the footstep table 167 to the side of the vehicle frame main member 2 on the lower side of the footstep table 167, while the upper end is secured with a bolt inserted into the attachment hole 169 (see FIG. 5) of the extension 9d of the frame member 9.

Flanges 31a are joined to the right and left side surfaces of the heat exchanger 31 and secured to the right and left side plates 7 using rivets. An upper lug 31b of the heat exchanger 31 is secured with rivets to the front edge portion of the bottom portion 9a of the frame member 9. The numeral 170 stands for a coolant water pipe.

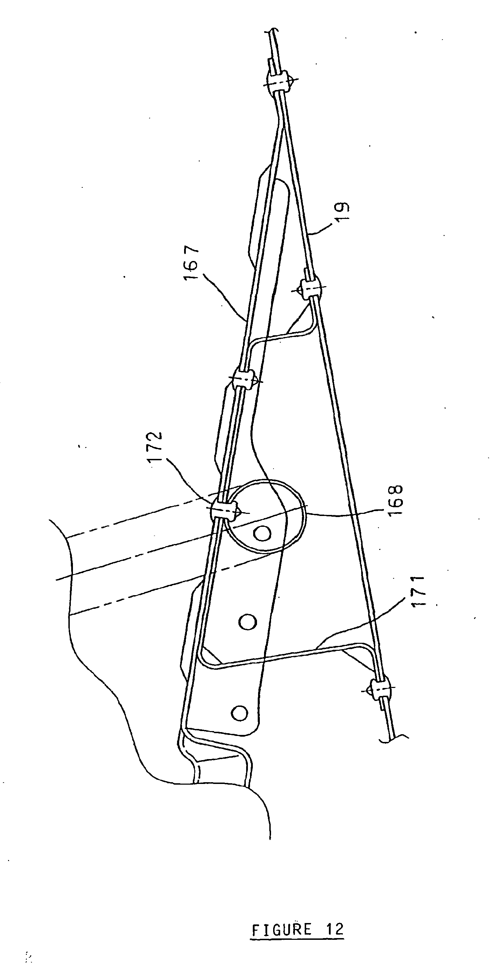

FIG. 12 shows the details of the footstep table 167.

A supporting member 171 made of sheet metal by bending process is rivet-secured to the underside of the footstep table 167. The lower edge of the supporting member 171 is riveted to the footstep 19 that constitutes the vehicle frame main member. The supporting pipe 168 is secured with rivets 172 to the footstep table 167 and to its supporting member 171.

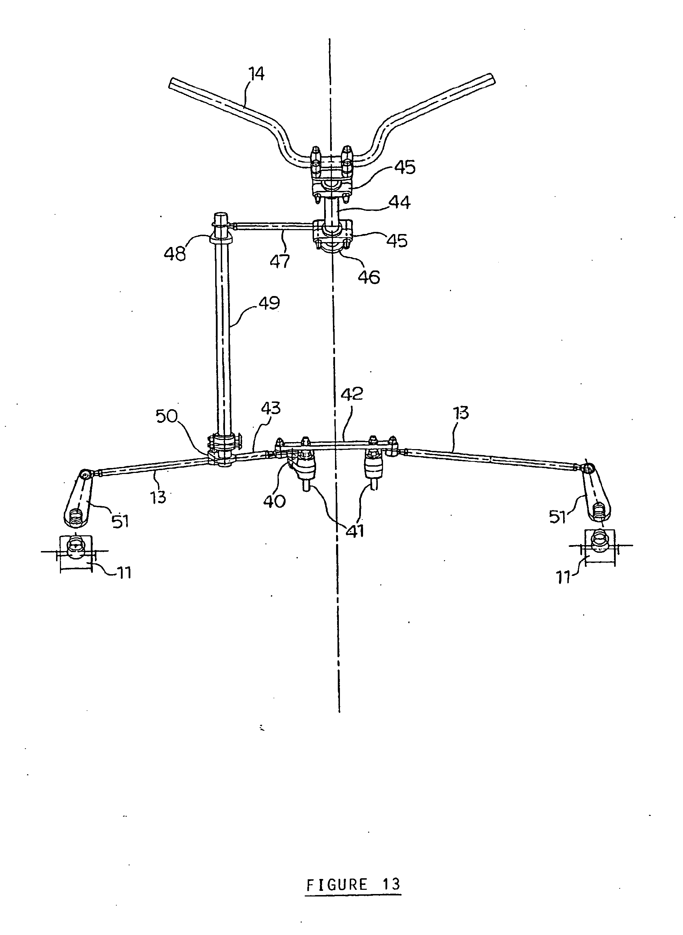

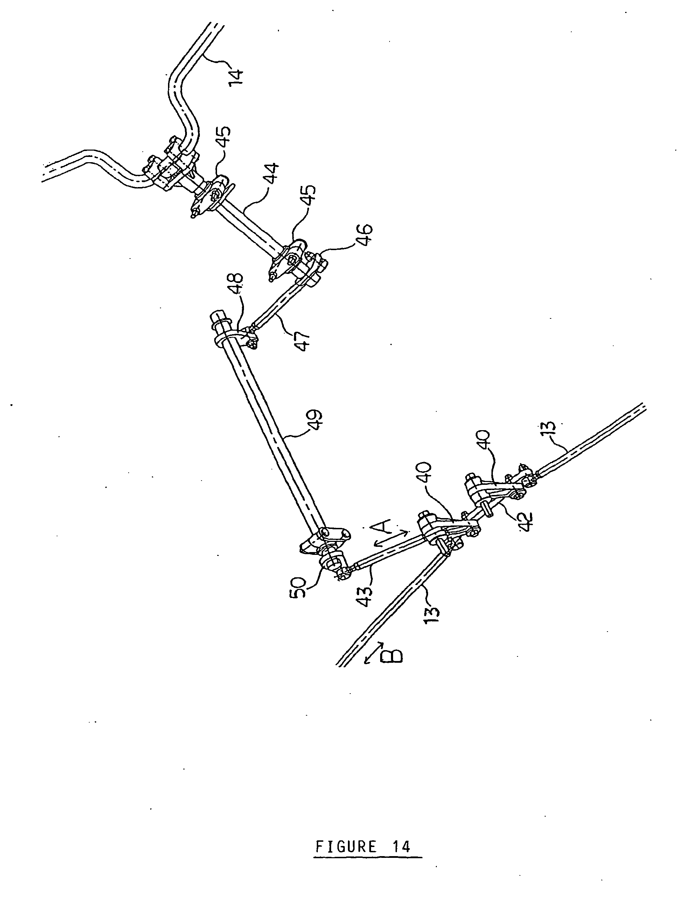

FIG. 13 shows the overall constitution of the steering system of the snowmobile described above. FIG. 14 is an oblique view of the essential parts of the steering system of the snowmobile.

A steering shaft 44 connected to the handlebars 14 is held with upper and lower supporting members 45 on the vehicle body side. A rod 47 is connected through an arm lever 46 to the lower end of the steering shaft 44. To the end of the rod 47 is connected one end of a rotary support shaft 49 through an arm lever 48. The other end of the rotary support shaft 49 is connected through an arm lever 50 to one end of the rod 43. The other end of the rod 43 is connected to one of two arm levers 40 interlocked through a link 42. Each arm lever 40 is connected to a steering rod 13. One end of each steering rod 13 is connected through an arm lever 51 to a steering shaft (not shown) of each ski 11.

With the above constitution of the steering system, when the handlebars 14 are operated, the steering shaft 44 and the rotary support shaft 49 rotate about their axes to move the rod 43 in the directions of arrow A. Along with the movement of the rod 43, the steering rod 13 moves in the directions of arrow B. Thus, the direction of the skis 11 connected to the steering rod 13 is controlled.

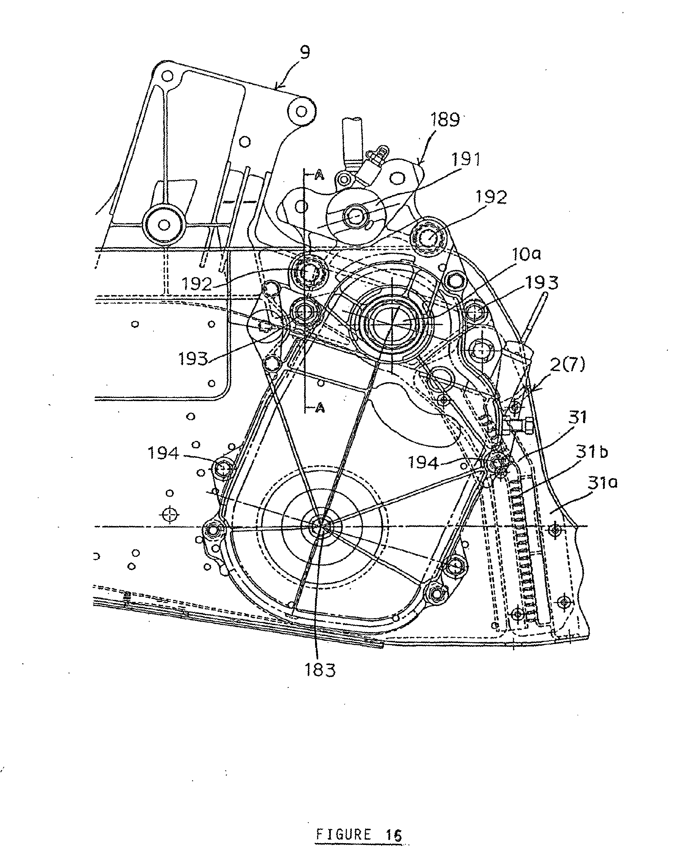

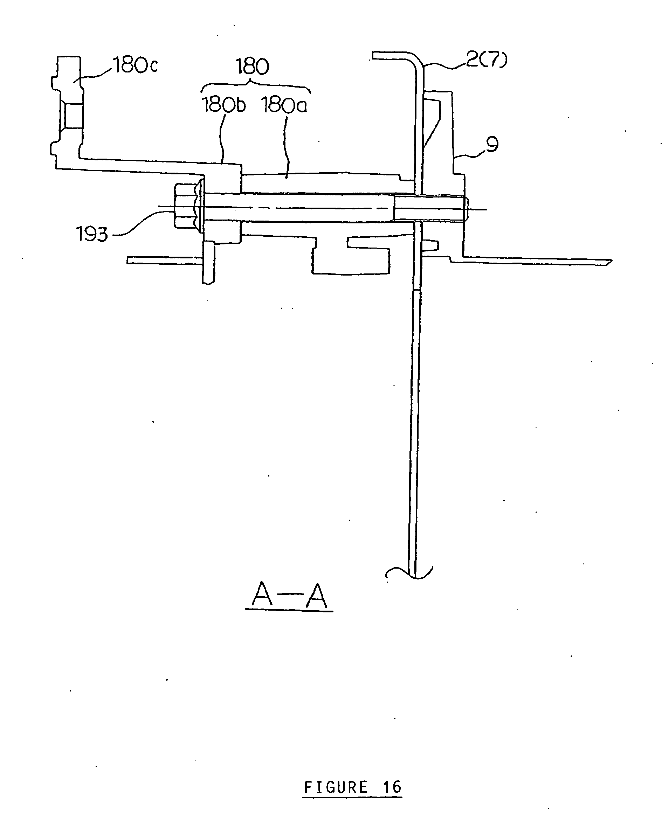

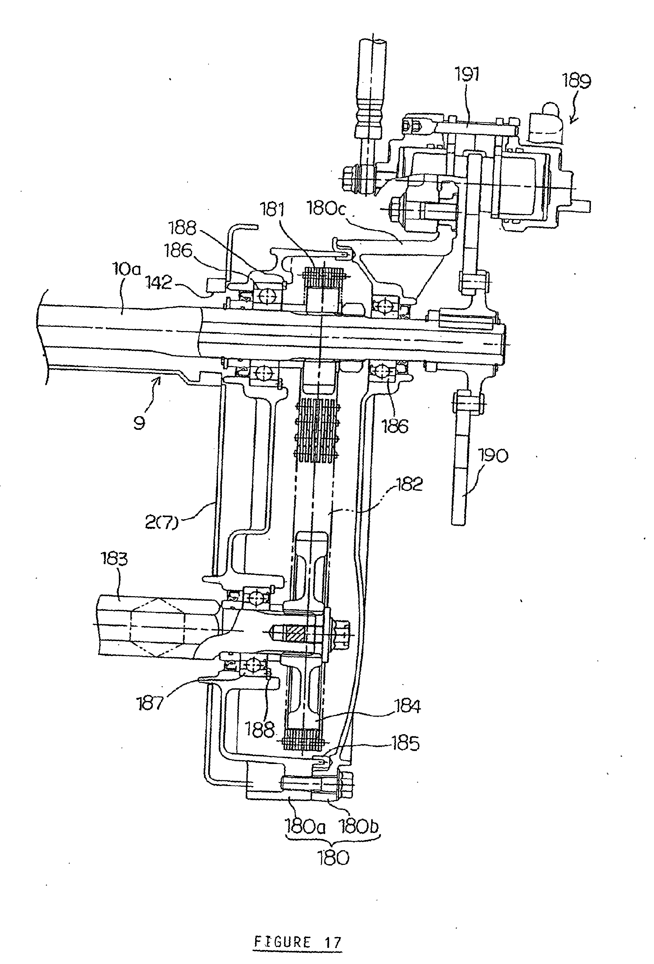

FIG. 15 shows the constitution of a chain case in side view. FIG. 16 shows the section A-A in FIG. 15. FIG. 17 is an overall sectional view of the chain case.

A chain case 180 is placed outside the side plate 7 of the vehicle frame main member 2 on the right hand side of the vehicle. As described above, the driven shaft 10a passes through the frame member 9. To the right hand side end of the driven shaft 10a projecting out of the side plate 7 is attached a sprocket 181 (FIG. 17). The through hole 142 in the frame member 9 for the driven shaft 10a to pass through is a loose hole and does not directly support the driven shaft 10a. A sprocket 184 is attached to the drive shaft 183 which drives a track (not shown). A chain 182 is routed around both of the sprockets 181 and 184. The chain case 180 that covers the sprockets 181, 184, and the chain 182 is of a two-piece, split type made up of a main member 180a and a cap 180b.

The gap between the main member 180a and the cover 180b is sealed with a sealing member 185 (FIG. 17). Bearings 186 are attached to parts of the driven shaft 10a on both sides of the sprocket 181 to support the driven shaft 10a for rotation within the chain case 180. A bearing 187 is attached to part of the drive shaft 183 inside the sprocket 184 to rotatably support the drive shaft 183 within the chain case 180. The bearings 186, and 187 in the case main member 180a are secured with snap rings 188 fitted in elastically compressed state in the grooves in the main member. As described above, since the chain case 180 in which the driven shaft 10a and the drive shaft 183 are held is secured to the side plate 7 of the vehicle frame main member 2 through the bearings 186, and 187, the driven shaft 10a and the drive shaft 183 are firmly secured to the vehicle frame side.

A brake device 189 is attached to the end of the driven shaft 10a outside the chain case 180. The brake device 189 is made up of a brake disk 190 attached to the driven shaft 10a and hydraulic calipers 191 attached to the case cap 180b to squeeze the brake disk 190. The calipers 191 are secured to the case cap 180b using two bolts 192. The numeral 180c (FIGs. 16 and 17) stands for a brake attachment member that is integral with the case cap 180b.

The chain case 180 is attached to the side plate 7 of the vehicle frame main member 2 and to the frame member 9 using two bolts 193 on the upper side. The chain case 180 is further attached to the side plate 7 using plural (for example three) bolts 194 on the lower side.

The heat exchanger 31 for cooling coolant water of the engine is provided with an attachment flange 31 a and fins 31 b.

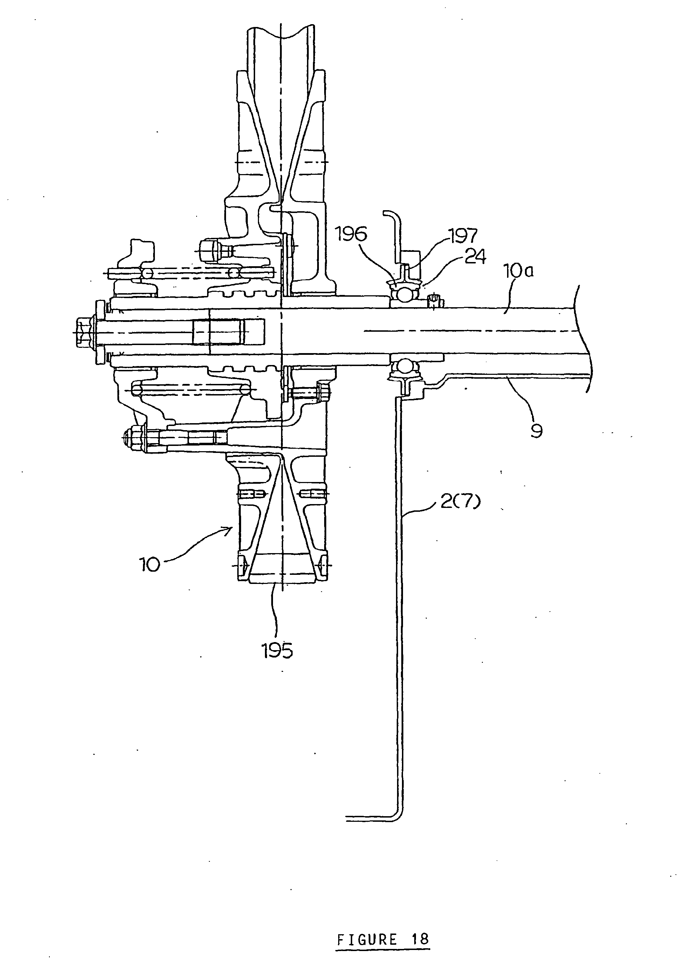

FIG. 18 is a sectional view of part of the transmission device where the driven wheel of the automatic belt transmission is located.

The driven wheel 10 is made up of a pair of sheaves with their mutual distance adjustable and with a V-belt 195 routed along the groove between both sheaves. The driven shaft 10a to which the driven wheel 10 is attached passes through the shaft hole 24 bored in the frame member 9 a bearing 196. In the example shown, the bearing 196 is held in the bearing holder 197 which is secured with bolts (not shown) inserted into the bolt passage holes 148 (FIG. 5) bored in the frame member 9. In place of the above attachment structure using bolts, it may be arranged, as shown above in reference to FIG. 17, to form a recess in the frame member 9 for the bearing 196 to fit in, press-fit the bearing 196 into the recess, and stop with a spring-loaded snap ring.

The description above refers to a frame structure for a snowmobile driven as the rotary power of the crankshaft of the engine is transmitted through an automatic belt transmission to the track belt, wherein a frame member is secured to a vehicle frame main member on the rear upper side of the engine compartment, with said frame member made by casting as a single member having a bottom portion, a rear side portion, and paired right and left side portions continuous from said bottom portion and said rear side portion; said engine is suspended at the front portion of said frame member; and the driven shaft of said automatic belt transmission is journaled with the side portions of said frame member.

Thus, the description above relates to a frame structure of a snowmobile, wherein said snowmobile is propelled to run by the rotary power of the crankshaft of the engine being transmitted through an automatic belt transmission to the track belt, wherein a central frame member is secured to a vehicle frame main member on the rear upper side of the engine compartment. Said frame member is made by casting as a single member having a bottom portion, a rear side portion, and paired right and left side portions continuous from said bottom portion and said rear side portion, said engine is suspended at the front portion of said frame member, and the driven shaft of said automatic belt transmission is journaled with the side portions of said frame member.

Accordingly, the central frame member is made by casting as a single unit on which the engine is mounted and with which the driven shaft of the automatic belt transmission for transmitting the rotary power of the engine is supported. Therefore, the frame member is easily unitized by casting with high accuracy of the frame member itself and with mutual position accuracy of various shafts transmitting the rotary power from the engine to the automatic belt transmission. Furthermore, because those shafts are attached with high accuracy to the vehicle frame, attachment accuracy of other components relative to those shafts is also improved.

Further preferable, since the frame member is made nearly in a box shape with sufficient strength in three dimensions with the bottom portion, the rear side portion, and the right and left portions integrally cast into a single piece, the engine and the driven shaft of the automatic belt transmission are supported on the vehicle frame with sufficient strength.

In a preferable example constitution, the rear side portion of the central frame member is made nearly upright and provided with through holes through which the exhaust pipes extending from the engine are passed and led out of the engine compartment.

With the above constitution, since the rear side portion of the frame member is made nearly upright and provided with through holes for leading the exhaust pipes out of the engine compartment, the through holes are made as small as possible and accordingly the decrease in the rigidity and strength of the frame member is minimized.

In another preferable example constitution, the rotary power of the driven shaft of the automatic belt transmission is transmitted to the track belt drive shaft through the endless transmitting means and the transmission case for housing the endless transmitting means is provided on the side portion of the frame member.

With the above constitution, since the transmission case (for example a chain case) for housing the endless transmitting means (such as a chain) is provided on the side portion of the frame member on which the driven shaft is supported, the transmission case is positioned with high accuracy relative to the driven shaft.

Since the transmission case is attached to the unitized frame member of the shape having high strength in three dimensions, the transmission case is firmly supported with the vehicle frame.

Preferably, said transmission case is integrally formed with said frame member by casting.

Thus, the transmission case is made by casting as a single body together with the frame member.

With the above constitution, it is possible to reduce the number of components and enhance the accuracy in position and angle of attaching the transmission case to the frame member.

In still another preferable example constitution, the side portions of the frame member are secured respectively to the paired right and left side members of the vehicle frame main member.

With the above constitution, since the frame member is integrally formed by casting, the right and left holes for attaching the side members of the vehicle frame main member may be bored in the right and left side portions of the frame member with good mutual position accuracy. As a result, the frame member may be secured to the vehicle frame main member with high accuracy.

Since the vehicle frame main member is secured to the integrally cast-formed frame member, rigidity and strength of the entire frame is increased.

In still another preferable example constitution, the paired right and left side portions of the frame member are integrally cast-formed with upright extending portions, and the extending portions are connected to the front portion of the vehicle frame main member through reinforcing members.

With the above constitution, since the frame member is integrally cast-formed with further integrally cast-formed extending portions and the front portion of the vehicle frame main member is connected and secured to the extending portions through reinforcing members, rigidity and strength of the front portion of the vehicle frame is made sufficiently high.

Preferably, said reinforcing member is made to support handlebars for steering skis of the snowmobile.

Thus, the handlebars for steering the skis of the snowmobile are supported on the reinforcing members.

With the above constitution, since the handlebars are supported with the firmly secured reinforcing members, the handlebars are firmly secured to the vehicle frame.

In still another preferable example constitution, the steering column for transmitting turning motion of the handlebars to skis is provided and the steering column is axially supported with the frame member.

With the above constitution, since the steering column is axially supported with the (integrally cast-formed) frame member which supports the handlebars through the reinforcing members, mutual positioning of the handlebars and the steering column is made with high accuracy. Since the steering column is axially supported with the integrally cast-formed frame member, the steering column is supported firmly.

In still another preferable example constitution, bolts for suspending the engine are installed as bridges to interconnect paired right and left side portions of the frame member.

With the above constitution, since the bolts for mounting the engine serve also as the reinforcing cross members, sufficient rigidity and strength of the frame member are provided along with the fact that the frame member is integrally cast-formed.

In still another preferable example constitution, the male screw member of a hollow shape is screwed into at least one of paired right and left side portions of the frame member to the extent that the end portion of the male screw member projects toward the inside of the side portion so that the distance between the end portion of the male screw portion and the opposite side portion is adjustable by turning the male screw member, the bolt is passed through a collar and the male screw member, and in the state of the collar being sandwiched between the end portion of the male screw member and the side portion opposite the male screw member, the paired right and left side portions are tightly secured together by means of a nut engaging with the bolt.

With the above constitution, since the distance between the paired right and left side portions is adjustable by means of the male screw member, it is possible to arrange the distance between the side portions with room to the extent that the engine is smoothly placed in, to place the engine between the side portions, to insert bolts through the attachment bosses projecting from the engine side, and to hold the engine tight between the side portions through collars by narrowing the distance. Then, the engine is firmly secured using the bolt and nut from outside both right and left side portions.

Briefly summarizing the above, the frame member is made as an integrally cast, unitized component, and the frame member is used to suspend the engine and to axially support the driven shaft of the automatic belt transmission for transmitting the rotary power of the engine. As a result, the frame member is made easily as a single unit with good accuracy by casting, and the accuracy of mutual attachment positions of various shafts for transmitting the rotary power from the engine to the automatic belt transmission is improved. Moreover, since those shafts are attached to the vehicle frame with good accuracy, position accuracy of other members relative to those shafts is improved.

From another aspect, since the frame member of a nearly box shape with sufficient strength in three dimensions having the bottom, rear, and right and left side portions is made as an integrally cast component, the engine and the driven shaft of the automatic belt transmission are firmly supported with the vehicle frame made of the frame member.

Therefore, as has been summarized above, there is provided a frame structure for a snowmobile having sufficient strength for supporting the driven shaft of the automatic belt transmission and the engine and capable of improving the accuracy in mutual attachment positions of rotary shafts and the accuracy in attaching other components to the vehicle frame, wherein said frame structure for a snowmobile (being driven by the rotary power of the engine's crankshaft transmitted through the automatic belt transmission to the track belt), in which a frame member 9 having integrally cast-formed bottom portion 9a, rear side portion 9b, and paired right and left side portions 9c interconnecting the former two is secured to a vehicle frame main member 2 located in the rear upper part of the engine compartment 130, the engine is suspended with the front part of the frame member 9, and the driven shaft of the automatic belt transmission is axially supported with the side portions 9c of the frame member 9.

## Claims

1. Snowmobile comprising an engine (107) provided in an engine compartment (130), having a frame structure with a vehicle frame main member (2) and a central frame member (9) **characterized in that** said central frame member (9) is being secured to the vehicle frame main member (2) at a rear upper side of the engine compartment (130), wherein said central frame member (9) is made as an integrally cast component and a front part (143) thereof is adapted to suspend the engine (107).

2. Snowmobile according to claim 1, **characterized in that** the central frame member (9) comprises a bottom portion (9a), a rear side portion (9b) and paired right and left side portions (9c) which are integrally cast-formed as one unitized component.

3. Snowmobile according to claim 2, **characterized by** a transmission, in particular an automatic belt transmission (114), wherein a power output of the engine (107) is transmitted to a track belt (120) by the transmission (114), and a driven shaft (10a) of said transmission (114) is supported by the paired right and left side portions (9c) of the central frame member (9).

4. Snowmobile according to claim 3, **characterized in that** one of the paired left and right side portions (9c) is provided with a through hole (142) for the driven shaft (10a) to pass through and the respective other of said paired left and right side portions (9c) is provided with a shaft hole (24) for attaching a bearing at the end of the driven shaft.

5. Snowmobile according to at least one of the preceding claims 2 to 4, **characterized in that** the rear side portion (9c) of said frame member (9) is made nearly upright and is provided with through holes (140) through which exhaust pipes (151) extending from the engine (107) are led out of the engine compartment (130).

6. Snowmobile according to claim 5, **characterized by** a heat shield (150), wherein the central frame member (9) is provided with bosses (141) for attaching the heat shield (150).

7. Snowmobile according to at least one of the preceding claims 2 to 6, **characterized by** a heat exchanger unit for engine coolant water secured to the rear side portion (9b) of the central frame member (9).

8. Snowmobile according to at least one of the preceding claims 3 to 7, **characterized in that a** rotation of the driven shaft (10a) of said transmission (114) is transmitted to a track belt drive shaft through an endless transmitting means and a transmission case for housing said endless transmitting means is provided on the side portion of said central frame member (9).

9. Snowmobile according to claim 8, **characterized in that** said transmission case is integrally formed with said central frame member (9) by casting.

10. Snowmobile according to at least one of the preceding claims 1 to 9, **characterized by** a further frame member comprises a bottom plate (6) and paired right and left side plates (7) continuous from said bottom plate (6), wherein said further frame member is attached to the vehicle frame main member (2) and constitutes the front part of the vehicle frame main member (2).

11. Snowmobile according to claim 10, **characterized in that** the paired right and left side portions (9c) of the central frame member (9) are respectively secured to the paired right and left side plates (7) of said further frame member constituting the front part of the vehicle frame main member (2).

12. Snowmobile according to at least one of the preceding claims 1 to 11, **characterized in that** the paired right and left side portions (9c) of said central frame member (9) are integrally cast-formed with upright extending portions (9d), and said extending portions (9d) are connected to the front part of the vehicle frame main member (2) through reinforcing members.

13. Snowmobile according to claim 12, **characterized in that** said reinforcing members are adapted to support handlebars (14) for steering skis (11) of the snowmobile.

14. Snowmobile according to claim 13, **characterized in that** a steering column (44) for transmitting turning motion of said handlebars (14) to skis (11) is provided and said steering column (44) is axially supported by said central frame member (9).

15. Snowmobile according to at least one of the preceding claims 1 to 14, **characterized by** bolts (166) for suspending the engine, wherein said bolts (166) are installed as bridges to securely interconnect the paired right and left side portions (9c) of said central frame member (9).

16. Snowmobile according to claim 15, **characterized by** a hollow, male screw member (160) being screwed into at least one of the paired right and left side portions (9c) of said central frame member (9) to the extent that an end portion of said male screw member (160) projects toward the inside of said side portion (9c) so that a distance between the end portion of the male screw portion (160) and the opposite side portion is adjustable by turning said male screw member (160), a bolt (156) is passed through a collar and said male screw member, and in the state of the collar (161) being sandwiched between the end portion of the male screw member (160) and the side portion opposite said male screw member (160), the paired right and left side portions (9c) are tightly secured together by means of a nut engaging with said bolt (156).

## Patentansprüche

1. Schneemobil, aufweisend einen Motor (107), vorgesehen in einem Motorabteil (130), das einen Rahmenaufbau mit einem Fahrzeugrahmen- Hauptteil (2) und einen zentrales Rahmenteil (9) hat, **dadurch gekennzeichnet, dass** das zentrale Rahmenteil (9) an dem Fahrzeugrahmen- Hauptteil (2) an einer oberen Seite des Motorabteils (130) befestigt ist, wobei das zentrale Rahmenteil (9) als ein einstückiges Gussbauteil hergestellt ist und ein vorderes Teil (143) desselben vorgesehen ist, den Motor (107) aufzuhängen.

2. Schneemobil nach Anspruch 1, **dadurch gekennzeichnet, dass** das zentrale Rahmenteil (9) einen Bodenabschnitt (8a), einen hinteren Seitenabschnitt (9b) und paarweise rechte und linke Seitenabschnitte (9c) aufweist, die als ein zu einer Einheit gebildetes Bauteil einstückig guss- geformt sind.

3. Schneemobil nach Anspruch 2, **gekennzeichnet durch** ein Getriebe, insbesondere ein automatisches Riemengetriebe (114), wobei eine Leistungsausgabe des Motors (107) auf einen Laufbahnriemen (120) **durch** das Getriebe (114) übertragen wird und eine angetriebene Welle (10a) des Getriebes (114) **durch** die paarweisen rechten und linken Seitenabschnitte (9c) des zentralen Rahmenteils (9) gelagert ist.

4. Schneemobil nach Anspruch 3, **dadurch gekennzeichnet, dass** einer der Paarweisen linken und rechten Seitenabschnitte (9c) mit einer Durchgangsbohrung (142) für das Hindurchführen der angetriebenen Welle (10a) versehen sind und der jeweilige andere der paarweisen linken und rechten Seitenabschnitte (9c) mit einer Wellenbohrung (24) zum Befestigen eines Lagers an dem Ende der angetriebenen Welle versehen ist.

5. Schneemobil nach zumindest einem der vorhergehenden Ansprüche 2 bis 4, **dadurch gekennzeichnet, dass** der hintere Seitenabschnitt (9c) des Rahmenteils (9) nahezu aufrecht hergestellt ist und mit Durchgangsbohrungen (140) versehen ist, durch die sich die Abgasrohre (151), die sich von dem Motor (107) erstrecken, aus dem Motorabteil (130) herausgeführt werden.

6. Schneemobil nach Anspruch 5, **gekennzeichnet durch** eine Wärmeabschirmung (150), wobei das zentrale Rahmenteil (9) mit Naben (141) zum Befestigen der Wärmeabschirmung (150) versehen ist.

7. Schneemobil nach zumindest einem der vorhergehenden Ansprüche 2 bis 6, **gekennzeichnet durch** eine Wärmetauschereinheit für die Motorkühlwassereinheit, befestigt an dem hinteren Seitenabschnitt (9b) des zentralen Rahmenteils (9).

8. Schneemobil nach zumindest einem der vorhergehenden Ansprüche 3 bis 7, **dadurch gekennzeichnet, dass** eine Drehung der angetriebenen Welle (10a) des Getriebes (114 auf eine Laufbahnriemen- Antriebswelle durch eine Endlos- Getriebeeinrichtung übertragen wird und ein Getriebegehäuse zum Unterbringen der Endlos-Getriebeeinrichtung an dem Seitenabschnitt des zentralen Rahmenteils (9) vorgesehen ist.

9. Schneemobil nach Anspruch 8, **dadurch gekennzeichnet, dass** das Getriebegehäuse mit dem zentralen Rahmenteil (9) durch Gießen einstückig gebildet ist.

10. Schneemobil nach zumindest einem der vorhergehenden Ansprüche 1 bis 9, **gekennzeichnet durch** ein weiteres Rahmenteil, das eine Bodenplatte (6) und paarweise rechte und linke Seitenplatten (7) in Fortsetzung von der Bodenplatte (6) aufweist, wobei das weitere Rahmenteil mit dem Fahrzeugrahmen- Hauptteil (2) verbunden ist und das vordere Teil des Fahrzeugrahmen- Hauptteiles (2) bildet.

11. Schneemobil nach Anspruch 10, **dadurch gekennzeichnet, dass** die paarweisen rechten und linken Seitenabschnitte (9c) des zentralen Rahmenteils (9) jeweils an den an den paarweisen rechten und linken Seitenplatten (7) des weiteren Rahmenteils, das den vorderen Teil des Fahrzeugrahmen- Hauptteils (2) bildet, befestigt sind.

12. Schneemobil nach zumindest einem der vorhergehenden Ansprüche 1 bis 11, **dadurch gekennzeichnet, dass** die paarweisen rechten und linken Seitenabschnitte (9c) des zentralen Rahmenteils (9) mit aufrecht sich erstreckenden Abschnitten (9d) einstückig guss- geformt sind, und die sich erstreckenden Abschnitte (9d) mit dem vorderen Teil des Fahrzeugrahmen- Hauptteils (2) durch Verstärkungsteile verbunden sind.

13. Schneemobil nach Anspruch 12, **gekennzeichnet durch** die Verstärkungsteile vorgesehen sind, um Lenkstangen (14) für die Steuerski (11) des Schneemobils zu tragen.

14. Schneemobil nach Anspruch 13, **gekennzeichnet durch** eine Lenksäule (44) zum Übertragen der Drehbewegung der Lenkstangen (14) auf die Ski (11) vorgesehen ist und die Lenksäule (44) **durch** das zentrale Rahmenteil (9) axial gelagert ist.

15. Schneemobil nach zumindest einem der vorhergehenden Ansprüche 1 bis 14, **gekennzeichnet durch** Schrauben (166) zum Aufhängen des Motors, wobei die Schrauben (166) als Brücken installiert sind, um die paarweisen rechten und linken Seitenabschnitte (9c) des zentralen Rahmenteils (9) sicher miteinander zu verbinden.

16. Schneemobil nach Anspruch 15, **gekennzeichnet durch** ein hohles Schraubenteil (160), das in zumindest einen der paarweisen rechten und linken Seitenabschnitte (9c) des zentralen Rahmenteils (9) bis zu dem Betrag verschraubt ist, dass ein Endabschnitt des Schraubenteils (160) in die Richtung zu der Innenseite des Seitenabschnittes (9c) so vorspringt, dass ein Abstand zwischen dem Endabschnitt des Schraubenabschnittes (160) und der gegenüberliegende Seitenabschnitt **durch** Drehen des Schraubenteils (160) einstellbar sind, wobei eine Schraube (156) **durch** einen Kragen und das Schraubenteil hindurchgeführt wird, und in diesem Zustand der Kragen (161) zwischen dem Endabschnitt des Schraubenteils (160) und dem Seitenabschnitt, gegenüberliegend zu dem Schraubenteil (160), angeordnet ist, wobei die paarweisen rechten und linken Seitenabschnitte (9c) gemeinsam mittels einer Mutter, die mit der Schraube (156) im Eingriff ist, fest befestigt werden.

## Revendications

1. Motoneige comportant un moteur (107) agencé dans un compartiment moteur (130), ayant une structure de châssis munie d'un élément principal de châssis de véhicule (2) et d'un élément central de châssis (9), **caractérisée en ce que** ledit élément central de châssis (9) est fixé sur l'élément principal de châssis de véhicule (2) sur un côté supérieur arrière du compartiment moteur (130), dans laquelle ledit élément central de châssis (9) est fabriqué comme un composant moulé d'un seul bloc et une partie avant (143) de celui-ci est adaptée pour suspendre le moteur (107).

2. Motoneige selon la revendication 1, **caractérisée en ce que** l'élément central de châssis (9) comporte une partie inférieure (9a), une partie latérale arrière (9b) et une paire de parties latérales droite et gauche (9c) qui sont formées moulées d'un seul bloc comme un seul composant unifié.

3. Motoneige selon la revendication 2, **caractérisée par** une transmission, en particulier une transmission automatique à courroie (114), dans laquelle une sortie de puissance du moteur (107) est transmise à une courroie de piste (120) par la transmission (114), et un arbre entraîné (10a) de ladite transmission (114) est supporté par la paire de parties latérales droite et gauche (9c) de l'élément central de châssis (9).

4. Motoneige selon la revendication 3, **caractérisée en ce que** l'une de la paire de parties latérales droite et gauche (9c) est munie d'un trou traversant (142) pour que l'arbre entraîné (10a) passe à travers celui-ci, et l'autre respective desdites deux parties latérales droite et gauche (9c) est munie d'un trou d'arbre (24) pour fixer un palier à l'extrémité de l'arbre entraîné.

5. Motoneige selon au moins une des revendications précédentes 2 à 4, **caractérisée en ce que** la partie latérale arrière (9c) dudit élément de châssis (9) est fabriquée sensiblement verticale et est munie de trous traversants (140) à travers lesquels des tuyaux d'échappement (151) s'étendant à partir du moteur (107) sont dirigés vers l'extérieur du compartiment moteur (130).

6. Motoneige selon la revendication 5, **caractérisée par** un écran thermique (150), dans laquelle l'élément central de châssis (9) est muni de bossages (141) pour fixer l'écran thermique (150).

7. Motoneige selon au moins une des revendications précédentes 2 à 6, **caractérisée par** une unité d'échangeur de chaleur pour de l'eau de refroidissement de moteur fixée sur la partie latérale arrière (9b) de l'élément central de châssis (9).

8. Motoneige selon au moins une des revendications précédentes 3 à 7, **caractérisée en ce qu'**une rotation de l'arbre entraîné (10a) de ladite transmission (114) est transmise à un arbre d'entraînement de courroie de piste par l'intermédiaire de moyens de transmission sans fin et un carter de transmission destiné à recevoir lesdits moyens de transmission sans fin est agencé sur la partie latérale dudit élément central de châssis (9).

9. Motoneige selon la revendication 8, **caractérisée en ce que** ledit carter de transmission est formé d'un seul bloc avec ledit élément central de châssis (9) par un moulage.

10. Motoneige selon au moins une des revendications précédentes 1 à 9, **caractérisée en ce qu'**un élément de châssis supplémentaire comporte une plaque de fond (6) et deux plaques latérales droite et gauche (7) continues à partir de ladite plaque de fond (6), dans laquelle ledit élément de châssis supplémentaire est fixé sur l'élément principal de châssis de véhicule (2) et constitue la partie avant de l'élément principal de châssis de véhicule (2).

11. Motoneige selon la revendication 10, **caractérisée en ce que** la paire de parties latérales droite et gauche (9c) de l'élément central de châssis (9) sont respectivement fixées sur les deux plaques latérales droite et gauche (7) dudit élément de châssis supplémentaire constituant la partie avant de l'élément principal de châssis de véhicule (2).

12. Motoneige selon au moins une des revendications précédentes 1 à 11, **caractérisée en ce que** la paire de parties latérales droite et gauche (9c) dudit élément central de châssis (9) sont formées moulées d'un seul bloc en ayant des parties s'étendant verticalement (9d), et lesdites parties d'extension (9d) sont reliées à la partie avant de l'élément principal de châssis de véhicule (2) par l'intermédiaire d'éléments de renforcement.

13. Motoneige selon la revendication 12, **caractérisée en ce que** lesdits éléments de renforcement sont adaptés pour supporter des poignées de guidon (14) pour diriger des skis (11) de la motoneige.

14. Motoneige selon la revendication 13, **caractérisée en ce qu'**une colonne de direction (44) destinée à transmettre un mouvement de rotation desdites poignées de guidon (14) aux skis (11) est agencée et ladite colonne de direction (44) est axialement supportée par ledit élément central de châssis (9).

15. Motoneige selon au moins une des revendications précédentes 1 à 14, **caractérisée par** des boulons (166) destinés à suspendre le moteur, dans laquelle lesdits boulons (166) sont installés comme des ponts pour relier mutuellement de manière ferme la paire de parties latérales droite et gauche (9c) dudit élément central de châssis (9).

16. Motoneige selon la revendication 15, **caractérisée en ce qu'**un élément de vis mâle, creux (160) est vissé dans au moins une de la paire de parties latérales droite et gauche (9c) dudit élément central de châssis (9) au point qu'une partie d'extrémité dudit élément de vis mâle (160) fait saillie en direction de l'intérieur de ladite partie latérale (9c) de telle sorte qu'une distance entre la partie d'extrémité de la partie de vis mâle (160) et la partie latérale opposée peut être réglée en tournant ledit élément de vis mâle (160), un boulon (156) est passé à travers un collier et ledit élément de vis mâle, et dans l'état où le collier (161) est enserré entre la partie d'extrémité de l'élément de vis mâle (160) et la partie latérale en face dudit élément de vis mâle (160), la paire de parties latérales droite et gauche (9c) sont solidement fixées ensemble au moyen d'un écrou en prise avec ledit boulon (156).
